# EUROPÄISCHE PATENTSCHRIFT

(11) **EP 1 216 349 B1**
(45) Veröffentlichungstag und Bekanntmachung des Hinweises auf die Patenterteilung: **26.01.2005**
(21) Anmeldenummer: 00967634.7
(22) Anmeldetag: 30.08.2000
(51) Int. Cl.: F02D 33/02, F02D 41/12

(54) **VORRICHTUNG UND VERFAHREN ZUM BETREIBEN EINER BRENNKRAFTMASCHINE MIT DROSSELKLAPPE IM SCHUBBETRIEB**
DEVICE AND METHOD FOR OPERATING AN INTERNAL COMBUSTION ENGINE PROVIDED WITH A BUTTERFLY VALVE IN OVERRUN MODE
DISPOSITIF ET PROCEDE PERMETTANT DE FAIRE FONCTIONNER UN MOTEUR A COMBUSTION INTERNE AVEC PAPILLON DES GAZ EN REGIME DE DECELERATION

(30) Priorität: 14.09.1999 DE 19943914
(43) Veröffentlichungstag der Anmeldung: 26.06.2002
(73) Patentinhaber: Volkswagen Aktiengesellschaft, 38436 Wolfsburg (DE)
(72) Erfinder: ZILLMER, Michael, 38173 Sickte (DE); POTT, Ekkehard, 38518 Gifhorn (DE)
(86) Internationale Anmeldenummer: PCT/EP2000/008464
(87) Internationale Veröffentlichungsnummer: WO 2001/020152

(56) Entgegenhaltungen:
- EP-A- 0 728 921
- DE-A- 4 332 445
- US-A- 4 391 246
- US-A- 5 902 210
- PATENT ABSTRACTS OF JAPAN vol. 015, no. 491 (M-1190), 12. Dezember 1991 (1991-12-12) & JP 03 213440 A (TOYOTA MOTOR CORP), 18. September 1991 (1991-09-18)
- PATENT ABSTRACTS OF JAPAN vol. 010, no. 388 (M-549), 25. Dezember 1986 (1986-12-25) & JP 61 178528 A (FUJITSU TEN LTD), 11. August 1986 (1986-08-11)

## Beschreibung

Die Erfindung betrifft ein Verfahren zum Betreiben einer Brennkraftmaschine eines Kraftfahrzeuges mit einer Drosselklappe, wobei in einem Schubbetrieb des Kraftfahrzeuges mit Schubabschaltung die Drosselklappe geöffnet wird, gemäß dem Oberbegriff des Anspruchs 1. Die Erfindung betrifft femer eine Vorrichtung zum Ansteuern einer Drosselklappe einer Brennkraftmaschine eines Kraftfahrzeuges zum Einstellen der Drosselklappe auf einen Wert gemäß einer Fahrpedalstellung, gemäß dem Oberbegriff des Anspruchs 11.

Bei Kraftfahrzeugen mit beispielsweise NOₓ-Speicherkatalysator wird eine verstärkte Durchströmung das Katalysatorsystems in Schubphasen des Kraftfahrzeuges mittels einer voll geöffneten Drosselklappe bei abgeschalteter Kraftstoffzuführung (Schubabschaltung) verwendet, um eine unterstützende Maßnahme bei der Katalysatorauskühlung zu erzielen. Der NOₓ-Speicherkatalysator wird damit schneller auf seine Arbeitstemperatur abgekühlt. Drei-Wege-Katalysatoren können bei einer derartigen Durchströmung mit großen, nahezu schadstofffreien Abgasmassenströmen ebenfalls besser gekühlt werden. Die aus Schadstoffspitzen zu Beginn einer Schubabschaltung resultierende Exothermiefreisetzung auf dem Katalysator kann durch den nachfolgenden Kühlgasstrom zusätzlich schnell abgetragen werden.

Bei einem Betrieb der Brennkraftmaschine eines Kraftfahrzeuges mit geöffneter Drosselklappe im Schubbetrieb führt ein geringes Schleppmoment der Brennkraftmaschine zu einer merkbaren Änderung des Fahrverhaltens. Zusätzlich kommt es bei dem Wiedereinsetzen des gefeuerten Betriebs zu einem von Fahrer und Mitfahrem unkomfortablen und als unangenehm empfundenen Fahrverhalten des Kraftfahrzeuges. Wenn beispielsweise bei niedriger Lastanforderung am Ende der Schubphase das Ansteuern der Drosselklappe zu spät und/oder zu langsam erfolgt und der Füllungsabbau dementsprechend spät durchgeführt wird, zeigt das Kraftfahrzeug für den Fahrer unerwartete Reaktionen, beispielsweise eine erhöhte Leistungsabgabe der Brennkraftmaschine, obwohl der Fahrer mit einem Fahrpedal keine hohe Leistung angefordert hat, sondern lediglich den Schubbetrieb beenden und in einen Fahrbetrieb mit niedriger Antriebsleistung wechseln wollte.

Aus der US 5 902 210 ist ein Verfahren und eine Vorrichtung zum Steuern eines Kraftfahrzeuges bekannt, wobei während eines Schubbetriebes die Kraftstoffzufuhr abgeschaltet und die Drosselklappe geöffnet wird. Um zu vermeiden, daß die Drosselklappe zu weit geöffnet ist, wenn nach einer Schubphase die Kraftstoffzufuhr in einen Normalzustand zurückkehrt, wird bei abgeschalteter Kraftstoffzufuhr die Drosselklappe zunächst für eine vorbestimmte Zeit vollständig geschlossen, wenn ein . Fahrer statt einer Verzögerung in einen Zustand ohne Verzögerung wechseln will.

Der vorliegenden Erfindung liegt daher die Aufgabe zugrunde, ein Verfahren und eine Vorrichtung der obengenannten Art zur Verfügung zu stellen, wobei die obengenannten Nachteile überwunden werden und ein Schubbetrieb mit offener Drosselklappe ohne Veränderung von Fahreigenschaften des Kraftfahrzeuges und ohne Komforteinbußen zur Verfügung steht.

Diese Aufgabe wird erfindungsgemäß durch ein Verfahren der o.g. Art mit den in Anspruch 1 gekennzeichneten Merkmalen und durch eine Vorrichtung der o.g. Art mit den in Anspruch 11 gekennzeichneten Merkmalen gelöst. Vorteilhafte Ausgestaltungen der Erfindung sind in den abhängigen Ansprüchen angegeben.

Dazu ist es bei einem Verfahren der o.g. Art erfindungsgemäß vorgesehen, daß ein erster Wert einer Stellung der Drosselklappe während des Schubbetriebs in Abhängigkeit von einer Kraftfahrzeuggeschwindigkeit und einer Motordrehzahl zu Beginn des Schubbetriebes ermittelt und die Drosselklappe während des Schubbetriebes auf diesen Wert eingestellt wird und daß für eine vorbestimmte Zeit nach Ende des Schubbetriebes die Drosselklappe auf einen in Abhängigkeit von Kraftfahrzeuggeschwindigkeit und Motordrehzahl berechneten zweiten Wert anstelle auf einen Wert gemäß Fahrpedalstellung eingestellt wird.

Dies hat den Vorteil, daß in jeder Fahrsituation ein Übergang vom bzw. in den Schubbetrieb mit offener Drosselklappe zu bzw. von einem gefeuerten Betrieb ohne merkliche Veränderung der Fahreigenschaften des Kraftfahrzeuges und mit entsprechendem Schleppmoment während des Schubbetriebes gewährleistet ist.

Für einen besonders komfortablen Übergang vom Schubbetrieb in den gefeuerten Betrieb wird während des Schubbetriebes der zweite Wert für die Stellung der Drosselklappe derart bestimmt, daß dieser zweite Wert einer Drosselklappenstellung bei Konstantfahrt mit der aktuell ermittelten Kraftfahrzeuggeschwindigkeit entspricht.

Eine Einstellung der Drosselklappe auf einen höchstwahrscheinlich zu erwartenden Wert, d.h. also eine Berechnung eines Wertes für die Stellung der Drosselklappe nach Ende des Schubbetriebes, erzielt man dadurch besonders gut, daß am Ende einer Schubphase eine Fußumsetzgeschwindigkeit von einem Bremspedal auf ein Fahrpedal ermittelt und der zweite Wert der Stellung für die Drosselklappe entsprechend der Fußumsetzgeschwindigkeit korrigiert wird, wobei der zweite Wert der Stellung für die Drosselklappe mittels der Fußumsetzgeschwindigkeit in bevorzugter Weise derart korrigiert wird, daß bei hoher Fußumsetzgeschwindigkeit der zweite Wert der Stellung für die Drosselklappe in Richtung höherer Leistungsabgabe der Brennkraftmaschine und bei niedriger Fußumsetzgeschwindigkeit der zweite Wert der Stellung für die Drosselklappe in Richtung niedrigerer Leistungsabgabe der Brennkraftmaschine geändert wird.

Eine noch genauere Abschätzung der vermutlichen Lastanforderung durch einen Fahrer nach Ende der Schubbetriebes erzielt man dadurch, daß am Ende einer Schubphase eine Fahrpedaldurchtrittsgeschwindigkeit eines Fahrpedals ermittelt und der zweite Wert der Stellung für die Drosselklappe entsprechend der Fahrpedaldurchtrittsgeschwindigkeit korrigiert wird, wobei zweckmäßigerweise der zweite Wert der Stellung für die Drosselklappe mittels einer Fahrpedaldurchtrittsgeschwindigkeit derart korrigiert wird, daß bei hoher Fahrpedaldurchtrittsgeschwindigkeit der zweite Wert der Stellung für die Drosselklappe in Richtung höherer Leistungsabgabe der Brennkraftmaschine und bei niedriger Fahrpedaldurchtrittsgeschwindigkeit der zweite Wert der Stellung für die Drosselklappe in Richtung niedrigerer Leistungsabgabe der Brennkraftmaschine geändert wird.

Die beiden letztgenannten Weiterbildungen der Erfindung beziehen ein Verhalten des Fahrers mit in die Berechnung des vermutlich zukünftigen Wertes für die Stellung der Drosselklappe ein, so daß sich eine besonders gute Abschätzung bzw. Berechnung dieses Wertes ergibt.

Um zu verhindern, daß im Schubbetrieb eine Wirkung eines Bremskraftverstärkers wegen der offenen Drosselklappe zu stark nachläßt, wird ein dritter Wert für eine Stellung der Drosselklappe vorrangig eingestellt, wenn ein Bremskraftverstärker einen Bedarf für eine Unterstützung signalisiert, wobei der dritte Wert derart gewählt ist, daß ein ausreichender Unterdruck zur Unterstützung des Bremskraftverstärkers vorliegt.

Um in endlicher Zeit nach Ende des Schubbetriebes wieder zu dem tatsächlichen Wert für die Stellung der Drosselklappe gemäß einer Stellung des Fahrpedals zurückzukehren, wird nach einer vorbestimmten Zeit nach Ende des Schubbetriebes von dem errechneten und ggf. korrigierten zweiten Wert für die Stellung der Drosselklappe auf einen Sollwert für die Drosselklappenstellung einer Motorsteuerung umgeschaltet. Zweckmäßigerweise wird hierbei aus dem zweiten Wert der Stellung für die Drosselklappe zusammen mit einer momentanen Motordrehzahl die vorbestimmte Zeit beispielsweise aus einem Kennfeld ermittelt. Eine während der vorbestimmten Zeit auftretende Differenz zwischen einem Wert für die Stellung der Drosselklappe gemäß Fahrpedatstellung und dem errechneten und ggf. korrigierten zweiten Wert für die Stellung der Drosselklappe wird in bevorzugter Weise durch Verändern eines Zündwinkels ausgeglichen.

Femer ist es bei einer Vorrichtung der o.g. Art erfindungsgemäß vorgesehen, daß diese eine Berechnungseinrichtung für einen berechneten Wert einer Stellung der Drosselklappe in Abhängigkeit von einer Kraftfahrzeuggeschwindigkeit und einer Motordrehzahl aufweist, wobei während eines Schubbetriebes sowie für eine vorbestimmte Zeit nach Ende des Schubbetriebes die Vorrichtung die Drosselklappe auf den berechneten Wert anstelle auf den Wert gemäß Fahrpedalstellung einstellt.

Dies hat den Vorteil, daß in jeder Fahrsituation ein Übergang vom bzw. in den Schubbetrieb mit offener Drosselklappe zu bzw. von einem gefeuerten Betrieb ohne merkliche Veränderung der Fahreigenschaften des Kraftfahrzeuges und mit entsprechendem Schleppmoment während des Schubbetriebes gewährleistet ist.

Für einen besonders komfortablen Übergang von dem gefeuerten Betrieb in den Schubbetrieb weist die Vorrichtung eine erste Einrichtung zum Ermitteln eines ersten berechneten Wertes der Stellung der Drosselklappe während des Schubbetriebes auf, beispielsweise mittels einer Fahrzeuggeschwindigkeit und einer Motordrehzahl am Beginn des Schubbetriebes aus einem Kennfeld.

Eine Einstellung der Drosselklappe auf einen höchstwahrscheinlich zu erwartenden Wert, d.h. also eine Berechnung eines Wertes für die Stellung der Drosselklappe nach Ende des Schubbetriebes erzielt man dadurch besonders gut, daß die Vorrichtung eine zweite Einrichtung zum Ermitteln eines zweiten berechneten Wertes der Stellung der Drosselklappe nach Ende des Schubbetriebes aufweist, beispielsweise mittels einer Fahrzeuggeschwindigkeit und einer Motordrehzahl am Ende des Schubbetriebes aus einem Kennfeld.

Eine gute Vorhersagequaliät einer höchstwahrscheinlich nach dem Ende des Schubbetriebes zu erwartenden Stellung der Drosselklappe erzielt man durch Berücksichtigung eines Verhaltens des Fahrers selbst, wobei in bevorzugter Weise die zweite Einrichtung einen Sensor zum Bestimmen einer Fußumsetzgeschwindigkeit von einem Bremspedal auf ein Fahrpedal umfaßt und den zweiten berechneten Wert der Stellung für die Drosselklappe entsprechend der Fußumsetzgeschwindigkeit korrigiert. Die zweite Einrichtung korrigiert beispielsweise den zweiten berechneten Wert der Stellung für die Drosselklappe mittels der Fußumsetzgeschwindigkeit derart, daß bei hoher Fußumsetzgeschwindigkeit der korrigierte zweite berechnete Wert der Stellung für die Drosselklappe einem Wert höherer Leistungsabgabe der Brennkraftmaschine und bei niedriger Fußumsetzgeschwindigkeit der korrigierte zweite Wert der Stellung für die Drosselklappe einem Wert niedrigerer Leistungsabgabe der Brennkraftmaschine entspricht.

Alternativ oder zusätzlich zur Fußumsetzgeschwindigkeit umfaßt die zweite Einrichtung einen Sensor zum Bestimmen einer Fahrpedaldurchtrittsgeschwindigkeit eines Fahrpedals und/oder zum Bestimmen einer momentanen Fahrzeuggeschwindigkeit und korrigiert den zweiten berechneten Wert der Stellung für die Drosselklappe entsprechend der Fahrpedaldurchtrittsgeschwindigkeit bzw. der Fahrzeuggeschwindigkeit aus einem Kennfeld. Die zweite Einrichtung korrigiert den zweiten berechneten Wert der Stellung für die Drosselklappe mittels der Fahrpedaldurchtrittsgeschwindigkeit beispielsweise derart, daß bei hoher Fahrpedaldurchtrittsgeschwindigkeit der korrigierte zweite berechnete Wert der Stellung für die Drosselklappe einem Wert höherer Leistungsabgabe der Brennkraftmaschine und bei niedriger Fahrpedaldurchtrittsgeschwindigkeit der korrigierte zweite Wert der Stellung für die Drosselklappe einem Wert niedrigerer Leistungsabgabe der Brennkraftmaschine entspricht.

Um zu verhindern, daß im Schubbetrieb eine Wirkung eines Bremskraftverstärkers wegen der offenen Drosselklappe zu stark nachläßt, weist die Vorrichtung einen mit einer Steuerung eines Bremskraftverstärkers verbundenen Eingang auf, wobei die Vorrichtung bei Anforderung durch die Steuerung des Bremskraftverstärkers einen berechneten Wert für die Stellung der Drosselklappe vorrangig derart einstellt, daß sich ein genügender Unterdruck zum Unterstützen des Bremskraftverstärkers ergibt.

Um in endlicher Zeit nach Ende des Schubbetriebes wieder zu dem tatsächlichen Wert für die Stellung der Drosselklappe gemäß einer Stellung des Fahrpedals zurückzukehren, weist die Vorrichtung eine Zeitsteuerung auf, welche nach einer vorbestimmten Zeit nach Ende des Schubbetriebes von dem berechneten Wert für die Stellung der Drosselklappe auf den Wert gemäß Fahrpedalstellung umschaltet. Zweckmäßigerweise bestimmt die Zeitsteuerung die vorbestimmte Zeit anhand des berechneten Wertes für die Stellung der Drosselklappe und einer momentanen Motordrehzahl aus einem Kennfeld.

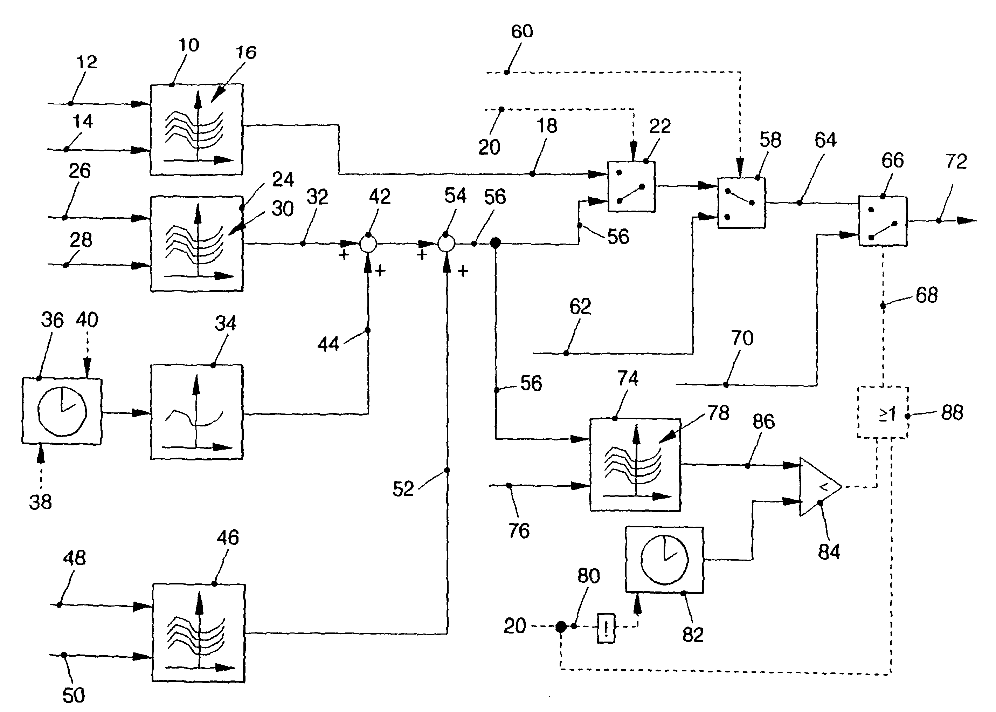

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. ein schematisches Blockdiagramm des erfindungsgemäßen Verfahrens

Im Funktionsblock 10 wird eine am Beginn des Schubbetriebes momentane Fahrzeuggeschwindigkeit vfzg 12 und eine am Beginn des Schubbetriebes momentane Motordrehzahl nmot 14 einer Brennkraftmaschine eines Kraftfahrzeuges bestimmt und aus diesen Werten mittels eines Kennfeldes 16 ein erster Wert 18 für eine Stellung einer Drosselklappe der Brennkraftmaschine ermittelt. Sofern eine Variable B_SA = true 20 einen Schubbetrieb des Kraftfahrzeuges indiziert, wird dieser erste Wert 18 der Stellung für die Drosselklappe von Funktionsblock 22 weitergegeben.

In einem weiteren Funktionsblock 24 wird parallel während des Schubbetrieb ständig aus einer aktuellen Fahrzeuggeschwindigkeit vfzg 26 und einer aktuellen Motordrehzahl nmot 28 mittels eines Kennfeldes 30 ein zweiter Wert 32 für die Stellung der Drosselklappe ermittelt. Dieser zweite Wert 32 entspricht dabei einer Drosselklappenstellung bei Konstantfahrt mit der aktuell ermittelten Geschwindigkeit 26 im Sinne einer Straßenteillast.

In einem dritten Funktionsblock 34 wird mittels einer Stoppuhr 36 eine Fußumsetzgeschwindigkeit von einem Bremspedal auf ein Fahrpedal ermittelt. Hierzu wird die Stoppuhr beispielsweise mittels eines Zustandes "Bremskontaktschalter aus" 38 initialisiert, d.h. gestartet, und mittels eines Leistungsanforderungssignals (PWR-Signal > 0) gestoppt. Aus der Zeitdifferenz läßt sich eine vermutliche Fahrerhandlung dahingehend vorhersagen, daß bei kurzer Zeitdauer mit hoher Wahrscheinlichkeit am Ende des Schubbetriebes vom Fahrer eine hohe Leistung angefordert werden wird, bzw. daß bei langer Zeitdauer mit hoher Wahrscheinlichkeit am Ende des Schubbetriebes vom Fahrer eine niedrige Leistung angefordert werden wird. Dementsprechend wird in einem Mischer bzw. Addierer 42 der zweite Wert 32 entsprechend korrigiert, d.h. bei kurzer Umstiegsdauer vom Brems- auf das Gaspedal wird der zweite Wert 32 auf einen Wert korrigiert, welcher einer Drosselklappenstellung mit höherer Leistungsanforderung entspricht und bei langer Umstiegsdauer vom Brems- auf das Gaspedal wird der zweite Wert 32 auf einen Wert korrigiert, welcher einer Drosselklappenstellung mit niedrigerer Leistungsanforderung entspricht. Die Größe des bei 42 hinzu gegebenen Korrekturwertes 44 ist dabei beispielsweise ebenfalls von der Umstiegsgeschwindigkeit abhängig.

In einem vierten Funktionsblock 46 wird aus einer Fahrpedaldurchtrittsgeschwindigkeit dPWG/dt 48 und einer aktuellen Fahrzeuggeschwindigkeit 50 ein weiterer Korrekturwert 52 bestimmt, welcher bei einem Mischer bzw. Addierer 54 den zweiten Wert 32 schließlich zu einem korrigierten zweiten Wert 56 ändert. Hierbei ist das Grundprinzip der Korrektur derart, daß bei hoher Fahrpedaldynamik zu Beginn des Durchtretevorgangs mit einem entsprechend hohen Endwert für die Stellung des Fahrpedals zu rechnen ist und umgekehrt. Dementsprechend korrigiert der zweite Korrekturwert 52 den zweiten Wert 32 in Richtung Drosselklappenstellung mit höherer bzw. niedrigerer Leistungsabforderung von der Brennkraftmaschine.

Wenn die Variable B_SA 20 in Funktionsblock 22 beispielsweise durch einen Wert "false" ein Ende des Schubbetriebes signalisiert, so gibt der Funktionsblock 22 nicht mehr den ersten Wert 18 sondern statt dessen den korrigierten zweiten Wert 56 weiter an einen Funktionsblock 58. Dieser wählt wiederum in Abhängigkeit von einer Variable B_BKVLEER 60 entweder den korrigierten zweiten Wert 56 für die Drosselklappenstellung oder einen dritten Wert 62 aus. Dieser dritte Wert 62 entspricht dabei einer Drosselklappenstellung, bei der ein ausreichender Unterdruck zum Unterstützen des Bremskraftverstärkers gewährleistet ist. Die Variable B_BKVLEER 60 entspricht dabei beispielsweise mit dem Wert "true" einer Anforderung von mehr Unterdruck durch den Bremskraftverstärker. Der Ausgangswert 64 des Funktionsblockes 58 wird weiter auf einen Funktionsblock 66 gegeben, welcher in Abhängigkeit von einem Signal 68 entweder den Ausgangswert 64 des Funktionsblockes 58 oder einen Sollwert 70 für die Drosselklappenstellung gemäß Fahrpedalstellung als Sollwert Drosselklappe 72 weitergibt. Hierbei entspricht dementsprechend nach Ende des Schubbetriebes der Ausgangswert 64 des Funktionsblockes 58 einem für die Zukunft als wahrscheinlich zu erwartenden Wert und der Sollwert 70 gemäß Fahrpedalstellung einem tatsächlich vom Fahrer angeforderten Wert der Drosselklappenstellung.

In einem fünften Funktionsblock 74 wird aus dem korrigierten zweiten Wert 56 der Stellung für die Drosselklappe und einer aktuellen Motordrehzahl nmot 76 mittels eines Kennfeldes 78 eine Zeitspanne 86 bestimmt, nach der nach Ende des Schubbetriebes von dem berechneten Ausgangswert 64 auf den tatsächlichen Sollwert 70 gemäß Fahrpedalstellung umgeschaltet werden soll. Am Ende des Schubbetriebes initialisiert die Variable B_SA 20 über Leitung 80 eine Stoppuhr 82 deren Ausgang im Funktionsblock 84 mit der in Funktionsblock 74 berechneten Zeitspanne 86 verglichen wird. Solange diese Zeitspanne 86 nach Ende des Schubbetriebes nicht verstrichen ist, gibt der Funktionsblock 66 den berechneten Ausgangswert 64 für die Drosselklappenstellung als "Sollwert Drosselklappe" 72 weiter. Sobald die Zeitspanne 86 verstrichen ist, schaltet ein Funktionsblock 88 gesteuert von dem Vergleicher 84 und der Variablen B_SA 20 mittels des Signals 68 den Funktionsblock 66 um, so daß nunmehr der Sollwert 70 für die Drosselklappenstellung gemäß Fahrpedalstellung als "Sollwert Drosselklappe" 72 weitergegeben wird, d.h. eine nicht dargestellte Drosselklappenstellvorrichtung wird wieder von den regulären Motorfunktionen angesteuert. Falls innerhalb dieses Zeitfensters 86 oder innerhalb der ersten 1 bis 20 Arbeitsspiele danach eine Abweichung vom Istmoment gegenüber dem vom Fahrer gewünschten Sollmoment auftritt, so wird diese Differenz während einer Verstellzeit der Drosselklappe beispielsweise durch eine Zündwinkeländerung ausgeglichen, sofern dadurch die Katalysatorentemperaturen nicht in den Bereich thermischer Schädigungen ansteigen.

## Patentansprüche

1. Verfahren zum Betreiben einer Brennkraftmaschine eines Kraftfahrzeuges mit einer Drosselklappe, wobei in einem Schubbetrieb des Kraftfahrzeuges mit Schubabschaltung die Drosselklappe geöffnet wird, **dadurch gekennzeichnet, daß** ein erster Wert einer Stellung der Drosselklappe während des Schubbetriebs in Abhängigkeit von einer Kraftfahrzeuggeschwindigkeit und einer Motordrehzahl zu Beginn des Schubbetriebes ermittelt und die Drosselklappe während des Schubbetriebes auf diesen Wert eingestellt wird und daß für eine vorbestimmte Zeit nach Ende des Schubbetriebes die Drosselklappe auf einen in Abhängigkeit von Kraftfahrzeuggeschwindigkeit und Motordrehzahl berechneten zweiten Wert anstelle auf einen Wert gemäß Fahrpedalstellung eingestellt wird.

2. Verfahren nach Anspruch 1, **dadurch gekennzeichnet, daß** während des Schubbetriebes der zweite Wert für die Stellung der Drosselklappe derart bestimmt wird, daß dieser zweite Wert einer Drosselklappenstellung bei Konstantfahrt mit der aktuell ermittelten Kraftfahrzeuggeschwindigkeit entspricht.

3. Verfahren nach Anspruch 1 oder 2, **dadurch gekennzeichnet, daß** am Ende einer Schubphase eine Fußumsetzgeschwindigkeit von einem Bremspedal auf ein Fahrpedal ermittelt und der zweite Wert der Stellung für die Drosselklappe entsprechend der Fußumsetzgeschwindigkeit korrigiert wird.

4. Verfahren nach Anspruch **3**, **dadurch gekennzeichnet, daß** der zweite Wert der Stellung für die Drosselklappe mittels der Fußumsetzgeschwindigkeit derart korrigiert wird, daß bei hoher Fußumsetzgeschwindigkeit der zweite Wert der Stellung für die Drosselklappe in Richtung höherer Leistungsabgabe der Brennkraftmaschine und bei niedriger Fußumsetzgeschwindigkeit der zweite Wert der Stellung für die Drosselklappe in Richtung niedrigerer Leistungsabgabe der Brennkraftmaschine geändert wird.

5. Verfahren nach einem der vorhergehenden Ansprüche, **dadurch gekennzeichnet, daß** am Ende einer Schubphase eine Fahrpedaldurchtrittsgeschwindigkeit eines Fahrpedals ermittelt und der zweite Wert der Stellung für die Drosselklappe entsprechend der Fahrpedaldurchtrittsgeschwindigkeit korrigiert wird.

6. Verfahren nach Anspruch 5, **dadurch gekennzeichnet, daß** der zweite Wert der Stellung für die Drosselklappe mittels einer Fahrpedaldurchtrittsgeschwindigkeit derart korrigiert wird, daß bei hoher Fahrpedaldurchtrittsgeschwindigkeit der zweite Wert der Stellung für die Drosselklappe in Richtung höherer Leistungsabgabe der Brennkraftmaschine und bei niedriger Fahrpedaldurchtrittsgeschwindigkeit der zweite Wert der Stellung für die Drosselklappe in Richtung niedrigerer Leistungsabgabe der Brennkraftmaschine geändert wird.

7. Verfahren nach einem der vorhergehenden Ansprüche, **dadurch gekennzeichnet, daß** ein dritter Wert für eine Stellung der Drosselklappe vorrangig eingestellt wird, wenn ein Bremskraftverstärker einen Bedarf für eine Unterstützung signalisiert, wobei der dritte Wert derart gewählt ist, daß ein ausreichender Unterdruck zur Unterstützung des Bremskraftverstärkers vorliegt.

8. Verfahren nach einem der vorhergehenden Ansprüche, **dadurch gekennzeichnet, daß** nach der vorbestimmten Zeit nach Ende des Schubbetriebes von dem errechneten und ggf. korrigierten zweiten Wert für die Stellung der Drosselklappe auf einen Sollwert für die Drosselklappenstellung einer Motorsteuerung umgeschaltet wird.

9. Verfahren nach Anspruch 8, **dadurch gekennzeichnet, daß** aus dem zweiten Wert der Stellung für die Drosselklappe zusammen mit einer momentanen Motordrehzahl die vorbestimmte Zeit ermittelt wird.

10. Verfahren nach Anspruch 8 oder 9, **dadurch gekennzeichnet, daß** eine während der vorbestimmten Zeit auftretende Differenz zwischen einem Wert für die Stellung der Drosselklappe gemäß Fahrpedalstellung und dem errechneten und ggf. korrigierten zweiten Wert für die Stellung der Drosselklappe durch Verändern eines Zündwinkels ausgeglichen wird.

11. Vorrichtung zum Ansteuern einer Drosselklappe einer Brennkraftmaschine eines Kraftfahrzeuges zum Einstellen der Drosselklappe auf einen Wert (70) gemäß einer Fahrpedalstellung, **dadurch gekennzeichnet, daß** diese eine Berechnungseinrichtung für einen berechneten Wert (64) einer Stellung der Drosselklappe in Abhängigkeit von einer Kraftfahrzeuggeschwindigkeit und einer Motordrehzahl aufweist, wobei während eines Schubbetriebes sowie für eine vorbestimmte Zeit (86) nach Ende des Schubbetriebes die Vorrichtung die Drosselklappe auf den berechneten Wert (64) anstelle auf den Wert (70) gemäß Fahrpedalstellung einstellt.

12. Vorrichtung nach Anspruch 11, **dadurch gekennzeichnet, daß** diese eine erste Einrichtung (10) zum Ermitteln eines ersten berechneten Wertes (18) der Stellung der Drosselklappe während des Schubbetriebes mittels einer Fahrzeuggeschwindigkeit (12) und einer Motordrehzahl (14) am Beginn des Schubbetriebes aus einem Kennfeld (16) aufweist.

13. Vorrichtung nach Anspruch 11 oder 12, **dadurch gekennzeichnet, daß** diese eine zweite Einrichtung (24, 34, 46) zum Ermitteln eines zweiten berechneten Wertes (32) der Stellung der Drosselklappe nach Ende des Schubbetriebes mittels einer Fahrzeuggeschwindigkeit (26) und einer Motordrehzahl (28) am Ende des Schubbetriebes aus einem Kennfeld (30) aufweist.

14. Vorrichtung nach Anspruch 13, **dadurch gekennzeichnet, daß** die zweite Einrichtung (24, 34, 46) einen Sensor (36) zum Bestimmen einer Fußumsetzgeschwindigkeit von einem Bremspedal auf ein Fahrpedal umfaßt und den zweiten berechneten Wert (32) der Stellung für die Drosselklappe entsprechend der Fußumsetzgeschwindigkeit korrigiert.

15. Vorrichtung nach Anspruch 14, **dadurch gekennzeichnet, daß** die zweite Einrichtung (24, 34, 46) den zweiten berechneten Wert (32) der Stellung für die Drosselklappe mittels der Fußumsetzgeschwindigkeit derart korrigiert, daß bei hoher Fußumsetzgeschwindigkeit der korrigierte zweite berechnete Wert (56) der Stellung für die Drosselklappe einem Wert höherer Leistungsabgabe der Brennkraftmaschine und bei niedriger Fußumsetzgeschwindigkeit der korrigierte zweite Wert (56) der Stellung für die Drosselklappe einem Wert niedrigerer Leistungsabgabe der Brennkraftmaschine entspricht.

16. Vorrichtung nach einem der Ansprüche 13 bis 15, **dadurch gekennzeichnet, daß** die zweite Einrichtung (24, 34, 46) einen Sensor (46) zum Bestimmen einer Fahrpedaldurchtrittsgeschwindigkeit (48) eines Fahrpedals umfaßt und den zweiten berechneten Wert der Stellung für die Drosselklappe entsprechend der Fahrpedaldurchtrittsgeschwindigkeit (48) und/oder entsprechend einer Fahrzeuggeschwindigkeit (50) korrigiert.

17. Vorrichtung nach Anspruch 16, **dadurch gekennzeichnet, daß** die zweite Einrichtung (24, 34, 46) den zweiten berechneten Wert (32) der Stellung für die Drosselklappe mittels der Fahrpedaldurchtrittsgeschwindigkeit (48) derart korrigiert, daß bei hoher Fahrpedaldurchtrittsgeschwindigkeit (48) der korrigierte zweite berechnete Wert (56) der Stellung für die Drosselklappe einem Wert höherer Leistungsabgabe der Brennkraftmaschine und bei niedriger Fahrpedaldurchtrittsgeschwindigkeit (48) der korrigierte zweite Wert (56) der Stellung für die Drosselklappe einem Wert niedrigerer Leistungsabgabe der Brennkraftmaschine entspricht.

18. Vorrichtung nach einem der Ansprüche 11 bis 17, **dadurch gekennzeichnet, daß** diese einen mit einer Steuerung eines Bremskraftverstärkers verbundenen Eingang aufweist, wobei die Vorrichtung bei Anforderung durch die Steuerung des Bremskraftverstärkers einen berechneten Wert (62) für die Stellung der Drosselklappe derart einstellt, daß sich ein genügender Unterdruck zum Unterstützen des Bremskraftverstärkers ergibt.

19. Vorrichtung nach einem der Ansprüche 11 bis 18, **dadurch gekennzeichnet, daß** diese eine Zeitsteuerung (74) aufweist, welche nach einer vorbestimmten Zeit (86) nach Ende des Schubbetriebes von dem berechneten Wert (64) für die Stellung der Drosselklappe auf den Wert (70) gemäß Fahrpedalstellung umschaltet.

20. Vorrichtung nach Anspruch 19, **dadurch gekennzeichnet, daß** die Zeitsteuerung (74) die vorbestimmte Zeit (86) anhand des berechneten Wertes (56) für die Stellung der Drosselklappe und einer momentanen Motordrehzahl (76) aus einem Kennfeld (78) bestimmt.

## Claims

1. Method for operating an internal combustion engine of a motor vehicle having a throttle valve, wherein the throttle valve is opened in an overrun mode of the motor vehicle with overrun deactivation, **characterized in that** a first value of a position of the throttle valve is determined during the overrun mode as a function of a velocity of the motor vehicle and an engine speed at the start of the overrun mode and the throttle valve is set to this value during the overrun mode, and **in that** for a predetermined time after the end of the overrun mode the throttle valve is set to a second value, calculated as a function of the velocity of the motor vehicle and the engine speed, instead of to a value according to the position of the accelerator pedal.

2. Method according to Claim 1, **characterized in that**, during the overrun mode, the second value for the position of the throttle valve is determined in such a way that this second value corresponds to a position of the throttle valve during constant travel at the currently determined velocity of the motor vehicle.

3. Method according to Claim 1 or 2, **characterized in that**, at the end of an overrun phase, a speed of transfer of a foot from a brake pedal to an accelerator pedal is determined, and the second value of the position of the throttle valve is corrected in accordance with the speed of transfer of a foot.

4. Method according to Claim 3, **characterized in that** the second value of the position of the throttle valve is corrected by means of the speed of transfer of a foot in such a way that when there is a high speed of transfer of a foot the second value of the position of the throttle valve is changed in the direction of a relatively high output of power of the internal combustion engine, and when there is a low speed of transfer of a foot the second value of the position of the throttle valve is changed in the direction of a relatively low output of power of the internal combustion engine.

5. Method according to one of the preceding claims, **characterized in that** at the end of an overrun phase a speed of depression of an accelerator pedal is determined and the second value of the position of the throttle valve is corrected in accordance with the speed of depression of the accelerator pedal.

6. Method according to Claim 5, **characterized in that** the second value of the position of the throttle valve is corrected by means of a speed of depression of the accelerator pedal in such a way that at a high speed of depression of the accelerator pedal the second value of the position of the throttle valve is changed in the direction of a relatively high output of power of the internal combustion engine, and when there is a low speed of depression of the accelerator pedal the second value of the position of the throttle valve is changed in the direction of a relatively low output of power of the internal combustion engine.

7. Method according to one of the preceding claims, **characterized in that** a third value for a position of the throttle valve is set with priority if a brake booster signals a demand for support, wherein the third value is selected in such a way that a sufficient partial vacuum to support the brake booster is present.

8. Method according to one of the preceding claims, **characterized in that** after the predetermined time after the end of the overrun mode, the system is switched over from the calculated, and possibly corrected, second value for the position of the throttle valve to a setpoint value for the position of the throttle valve of an engine controller.

9. Method according to Claim 8, **characterized in that** the predetermined time is determined from the second value of the position of the throttle valve together with an instantaneous engine speed.

10. Method according to Claim 8 or 9, **characterized in that** a difference which occurs during the predetermined time, between a value for the position of the throttle valve according to the position of the accelerator pedal and the calculated, and possibly corrected, second value for the position of the throttle valve is compensated for by changing an ignition angle.

11. Device for actuating a throttle valve of an internal combustion engine of a motor vehicle for setting the throttle valve to a value (70) according to a position of the accelerator pedal, **characterized in that** the latter has a calculation device for a calculated value (64) of a position of the throttle valve as a function of a velocity of the motor vehicle and an engine speed, wherein, during an overrun mode and for a predetermined time (86) after the end of the overrun mode, the device sets the throttle valve to the calculated value (64) instead of to the value (70) according to the position of the accelerator pedal.

12. Device according to Claim 11, **characterized in that** said device has a first apparatus (10) for determining a first calculated value (18) of the position of the throttle valve during the overrun mode by means of a velocity (12) of the vehicle and an engine speed (14) at the start of the overrun mode from a characteristic diagram (16).

13. Device according to Claim 11 or 12, **characterized in that** said device has a second apparatus (24, 34, 46) for determining a second calculated value (32) of the position of the throttle valve after the end of the overrun mode by means of a velocity (26) of the vehicle and an engine speed (28) at the end of the overrun mode from a characteristic diagram (30).

14. Device according to Claim 13, **characterized in that** the second apparatus (24, 34, 46) comprises a sensor (36) for determining a speed of transfer of a foot from a brake pedal to an accelerator pedal, and corrects the second calculated value (32) of the position of the throttle valve according to the speed of transfer of a foot.

15. Device according to Claim 14, **characterized in that** the second apparatus (24, 34, 46) corrects the second calculated value (32) of the position of the throttle valve by means of the speed of transfer of a foot in such a way that at a high speed of transfer of a foot the corrected, second calculated value (56) of the position of the throttle valve corresponds to a value with a relatively high power output of the internal combustion engine, and at a low speed of transfer of a foot the corrected second value (56) of the position of the throttle valve corresponds to a value with a relatively low power output of the internal combustion engine.

16. Device according to one of Claims 13 to 15, **characterized in that** the second apparatus (24, 34, 46) comprises a sensor (46) for determining a speed (48) of depression of an accelerator pedal, and corrects the second calculated value of the position of the throttle valve in accordance with the speed (48) of depression of the accelerator pedal and/or in accordance with a velocity (50) of the vehicle.

17. Device according to Claim 16, **characterized in that** the second apparatus (24, 34, 46) corrects the second calculated value (32) of the position of the throttle valve by means of the speed (48) of depression of the accelerator pedal in such a way that at a high speed (48) of depression of the accelerator pedal the corrected, second calculated value (56) of the position of the throttle valve corresponds to a value with a relatively high power output of the internal combustion engine, and at a low speed (48) of depression of the accelerator pedal the corrected second value (56) of the position of the throttle valve corresponds to a value with a relatively low power output of the internal combustion engine.

18. Device according to one of Claims 11 to 17, **characterized in that** said device has an input which is connected to a controller of a brake booster, wherein when requested by the controller of the brake booster the device sets a calculated value (62) for the position of the throttle valve in such a way that a sufficient partial vacuum to support the brake booster is produced.

19. Device according to one of Claims 11 to 18, **characterized in that** said device has a timer (74) which, after a predetermined time (86) at the end of the overrun mode, switches over from the calculated value (64) for the position of the throttle valve to the value (70) according to the position of the accelerator pedal.

20. Device according to Claim 19, **characterized in that** the timer (74) determines the predetermined time (86) by reference to the calculated value (56) for the position of the throttle valve and to an instantaneous engine speed (76) from a characteristic diagram (78).

## Revendications

1. Procédé permettant de faire fonctionner un véhicule automobile avec un papillon des gaz, dans lequel le papillon des gaz est ouvert lors d'un fonctionnement en décélération du véhicule automobile avec débrayage, **caractérisé en ce que** l'on détecte une première valeur d'une position du papillon des gaz pendant le fonctionnement en décélération en fonction d'une vitesse du véhicule automobile et d'un régime du moteur au début du fonctionnement en décélération et le papillon de gaz est ajusté à cette valeur pendant le fonctionnement en décélération et **en ce que**, pendant un temps prédéterminé à la fin du fonctionnement en décélération, le papillon des gaz est ajusté à une deuxième valeur calculée en fonction de la vitesse du véhicule automobile et du régime du moteur au lieu d'une valeur en fonction de la position de la pédale d'accélérateur.

2. Procédé selon la revendication 1, **caractérisé en ce que** pendant le fonctionnement en décélération, la deuxième valeur de la position du papillon des gaz est déterminée de telle sorte que cette deuxième valeur corresponde à une position du papillon des gaz pour une conduite constante à la vitesse du véhicule automobile effectivement détectée.

3. Procédé selon la revendication 1 ou 2, **caractérisé en ce que** l'on détecte, à la fin d'une phase de décélération, une vitesse de réaction du pied passant d'une pédale de frein à une pédale d'accélérateur et la deuxième valeur de la position du papillon des gaz est corrigé en fonction de la vitesse de réaction du pied.

4. Procédé selon la revendication 3, **caractérisé en ce que** la deuxième valeur de la position du papillon des gaz est corrigée au moyen de la vitesse de réaction du pied de telle sorte que pour une vitesse de réaction du pied plus élevée, la deuxième valeur de la position du papillon des gaz soit modifiée dans le sens d'une plus grande émission de puissance du moteur à combustion interne et que pour une vitesse de réaction du pied plus faible, la deuxième valeur de la position du papillon des gaz soit modifiée dans le sens d'une plus faible émission de puissance du moteur à combustion interne.

5. Procédé selon l'une quelconque des revendications précédentes, **caractérisé en ce que** l'on détecte à la fin d'une phase de décélération une vitesse d'enfoncement de la pédale d'accélérateur et la deuxième valeur de la position du papillon des gaz est corrigée en fonction de la vitesse d'enfoncement de la pédale d'accélérateur.

6. Procédé selon la revendication 5, **caractérisé en ce que** la deuxième valeur de la position du papillon des gaz est corrigée au moyen d'une vitesse d'enfoncement de la pédale d'accélérateur de telle sorte que pour une vitesse d'enfoncement de la pédale d'accélérateur élevée, la deuxième valeur de la position du papillon des gaz soit modifiée dans le sens d'une plus grande émission de puissance du moteur à combustion interne, et que pour une vitesse d'enfoncement de la pédale d'accélérateur plus faible, la deuxième valeur de la position du papillon des gaz soit modifiée dans le sens d'une plus faible émission de puissance du moteur à combustion interne.

7. Procédé selon l'une quelconque des revendications précédentes, **caractérisé en ce que** l'on ajuste de manière prioritaire une troisième valeur de la position du papillon des gaz lorsqu'un servofrein signale un besoin de support, la troisième valeur étant choisie de telle sorte qu'une dépression suffisante soit présente pour le support du servofrein.

8. Procédé selon l'une quelconque des revendications précédentes, **caractérisé en ce qu'**après le temps prédéterminé à la fin du fonctionnement en décélération, on passe de la deuxième valeur calculée et éventuellement corrigée pour la position du papillon des gaz à une valeur de consigne pour la position du papillon des gaz d'une commande de moteur.

9. Procédé selon la revendication 8, **caractérisé en ce qu'**à partir de la deuxième valeur de la position du papillon des gaz, conjointement avec un régime instantané du moteur, on détermine le temps prédéterminé.

10. Procédé selon la revendication 8 ou 9, **caractérisé en ce qu'**une différence entre une valeur pour la position du papillon des gaz en fonction de la position de la pédale d'accélérateur et la deuxième valeur calculée et éventuellement corrigée pour la position du papillon des gaz, se produisant pendant le temps prédéterminé, est compensée par modification d'un angle d'allumage.

11. Dispositif de commande d'un papillon d'un moteur à combustion interne d'un véhicule automobile pour l'ajustement du papillon des gaz à une valeur (70) en fonction d'une position de la pédale d'accélérateur, **caractérisé en ce que** celui-ci présente un dispositif de calcul pour une valeur calculée (64) d'une position du papillon des gaz en fonction d'une vitesse du véhicule automobile et d'un régime du moteur, le dispositif ajustant le papillon des gaz à la valeur calculée (64) au lieu d'à la valeur (70) en fonction de la position de la pédale d'accélérateur pendant un fonctionnement en décélération ainsi que pendant un temps prédéterminé (86) à la fin du fonctionnement en décélération.

12. Dispositif selon la revendication 11, **caractérisé en ce que** celui-ci présente un premier dispositif (10) pour détecter une première valeur calculée (18) de la position du papillon des gaz pendant le fonctionnement en décélération au moyen d'une vitesse du véhicule automobile (12) et d'un régime du moteur (14) au début du fonctionnement en décélération à partir d'un champ caractéristique (16).

13. Dispositif selon la revendication 11 ou 12, **caractérisé en ce que** celui-ci présente un deuxième dispositif (24, 34, 46) pour détecter une deuxième valeur calculée (32) de la position du papillon des gaz à la fin d'un fonctionnement en décélération au moyen d'une vitesse du véhicule automobile (26) et d'un régime du moteur (28) à la fin du fonctionnement en décélération à partir d'un champ caractéristique (30).

14. Dispositif selon la revendication 13, **caractérisé en ce que** le deuxième dispositif (24, 34, 46) comprend un capteur (36) pour déterminer une vitesse de réaction du pied passant d'une pédale de frein à une pédale d'accélérateur et corrige la deuxième valeur calculée (32) de la position du papillon des gaz en fonction de la vitesse de réaction du pied.

15. Dispositif selon la revendication 14, **caractérisé en ce que** le deuxième dispositif (24, 34, 46) corrige la deuxième valeur calculée (32) de la position du papillon des gaz au moyen de la vitesse de réaction du pied de telle sorte que dans le cas d'une vitesse de réaction du pied élevée, la deuxième valeur corrigée calculée (56) de la position du papillon des gaz correspond à une valeur de plus grande émission de puissance du moteur à combustion interne, et que dans le cas d'une vitesse de réaction du pied plus faible, la deuxième valeur corrigée (56) de la position du papillon des gaz correspond à une valeur de plus faible émission de puissance du moteur à combustion interne.

16. Dispositif selon l'une quelconque des revendications 13 à 15, **caractérisé en ce que** le deuxième dispositif (24, 34, 46) comprend un capteur (46) pour déterminer une vitesse d'enfoncement de la pédale d'accélérateur (48) et corrige la deuxième valeur calculée de la position du papillon des gaz en fonction de la vitesse d'enfoncement de la pédale d'accélérateur (48) et/ou en fonction d'une vitesse du véhicule (50).

17. Dispositif selon la revendication 16, **caractérisé en ce que** le deuxième dispositif (24, 34, 46) corrige la deuxième valeur calculée (32) de la position du papillon des gaz au moyen de la vitesse d'enfoncement de la pédale d'accélérateur (48) de telle sorte que dans le cas d'une vitesse d'enfoncement de la pédale d'accélérateur (48) élevée, la deuxième valeur calculée corrigée (56) de la position du papillon des gaz corresponde à une valeur d'émission de puissance plus élevée du moteur à combustion interne et que dans le cas d'une vitesse d'enfoncement de la pédale d'accélérateur (48) moins élevée, la deuxième valeur corrigée (56) de la position du papillon des gaz corresponde à une valeur de plus faible émission de puissance du moteur à combustion interne.

18. Dispositif selon l'une quelconque des revendications 11 à 17, **caractérisé en ce que** celui-ci présente une entrée connectée à une commande d'un servofrein, le dispositif, dans le cas d'une demande par la commande du servofrein, ajustant une valeur calculée (62) de la position du papillon des gaz de telle sorte qu'une dépression suffisante soit présente pour le support du servofrein.

19. Dispositif selon l'une quelconque des revendications 11 à 18, **caractérisé en ce que** celui-ci présente une commande temporisée (74) qui effectue après un temps prédéterminé (86) à la fin du fonctionnement en décélération un passage de la valeur calculée (64) pour la position du papillon des gaz à la valeur (70) en fonction de la position de la pédale d'accélérateur.

20. Dispositif selon la revendication 19, **caractérisé en ce que** la commande temporisée (74) détermine le temps prédéterminé (86) à l'aide de la valeur calculée (56) de la position du papillon des gaz et d'un régime instantané du moteur (76) à partir d'un champ caractéristique (78).
